# EUROPEAN PATENT APPLICATION

(11) **EP 0 530 891 A1**
(43) Date of publication of application: **10.03.1993**
(21) Application number: 92202529.1
(22) Date of filing: 18.08.1992
(51) Int. Cl.: H01M 2/28, H01M 2/30, H01M 2/22

(54) **Battery construction and method of connecting terminals to electrodes**

(30) Priority: 03.09.1991 US 753495; 26.03.1992 US 858054
(71) Applicant: GENERAL MOTORS CORPORATION, Detroit Michigan 48202 (US)
(72) Inventor: Mix, Renard Eugene, Yorktown, IN 47396 (US); Brutchen, George William, Winchester, IN 47394 (US)
(74) Representative: Denton, Michael John

(57) **Abstract**

A bi-polar battery (10) has a terminal of an electrically-conductive lead-based or other low melting point metal with a connector strap (78) fused to a row of lead-based lugs (48) of electrode plates (26) that extend from the interior of a heat-sensitive battery case (12) of plastics material through a slotted pocket (52) formed in a case wall (14), that contains a bed of glass beads (84) which effectively isolates the electrode plates (26) from the strap (78) whilst providing support for the lugs (48). The ends (14,16) of the battery case (12) have insulator and positioning sections (56,58) into which pre-moulded terminals (60) are fitted so that they can be subsequently heated into a melt for amalgamation to the lugs (48,50) without heat damage to the case (12) and so that the terminals (60) are precisely located on the ends (14,16) of the battery case (12). A lug-terminal amalgamation process is disclosed in which the glass beads (84) are fed into a first slotted pocket (52) in a one wall (14) of the battery case (12) through which the lugs (48) of a first set of electrode plates (26) extend so that a sealing and heat-insulating bed is provided between the connector strap (78) of the terminal (60) and the body of the electrode plates (26) within the case (12). Flux is applied to the lugs (48) and the strap (78) in the fusing area, and the strap (78) is subsequently installed over the lugs (48) which protects the lugs (48) from heat damage. An induction coil (90) is then placed over the strap (78) and energized for a given period of time so that the strap (78) changes to a molten state and flows onto the bed and between the lugs (48) to fuse therewith. The coil (90) is removed and the terminal (60) and lugs (48) are cooled so that the molten metal solidifies to complete the terminal connection. The process is repeated for joining a second terminal to a second set of electrode plates (32) of different polarity than the first set.

## Description

This invention relates to electric charge storage batteries and more particularly to a battery featuring a welded connection between internal electrodes layered in the battery case and a conductive strap joining those electrodes. This invention further relates to a method of connecting a plurality of electrodes to battery plate straps as specified in the preamble of claim 1, for example as disclosed in "Storage Batteries" by G.W.Wood Vinal, Sc.D, Fourth Edition, page 70, wherein a technique of burning a pre-cast plate strap and terminal to plate lugs of a storage battery is disclosed. The pre-cast part has a plurality of toes which interdigitate with the plate lugs. Typically, a similarly-toed iron block is also interdigitated with the lugs beneath the pre-cast part and forms a mould for containing the melt and preventing it from flowing down between the plates when heat (i.e., by a gas torch) is applied to melt the pre-cast part and the plate lugs.

Prior to the present invention bi-polar lead-acid and other electric charge storage batteries have been made with positive and negative electrode plates interleaved in the cells of the battery. A first end cell of the battery may have positive electrode plates with projecting lugs that are joined to a connector strap of a positive battery terminal of a lead-based alloy (hereafter termed "lead"). Another end cell of the battery may have internal negative electrode plates with projecting lugs that are joined to the connector strap of an external negative terminal usually identical to the positive terminal. Similarly, the positive plates of intermediate cells (i.e., between the end cells) are likewise joined with a positive plate strap which in turn is connected to a negative strap in the next adjacent cell via an intercell connector. This lug-strap connection is generally made by arc-welding, torch-flaming the straps, until the strap material amalgamates or fuses with the material of the lugs. This fusing is generally done with the use of comb-like containers/tooling installed over, and interdigitating with, the lugs prior to the fusion of the lugs with the strap to prevent strap material from flowing between and short-circuiting the interleaved positive and negative plates resulting in the scrapping and recycling of the electrode assembly. Alternatively, the strap may be cast directly in place using the so-called "cast-on-strap" process wherein the lugs are positioned in a mould and molten lead cast thereabout. Generally, the assembly of the straps and plates is made outside of the battery case and is then inserted in the battery case. An electrolyte is then added and the case is subsequently sealed to prevent electrolyte leakage.

A method of joining laterally-spaced lead-based electrode plates that are mounted in a battery case of heat-sensitive material, according to the present invention, is characterised by the features specified in the characterising portion of claim 1.

The present invention contemplates a unique method of joining plate lugs to a pre-cast plate strap. The invention shall hereafter be described in conjunction with joining the plates in the end cell of a battery to a battery terminal, but is not restricted thereto. Rather the process is equally applicable to joining the plates of intermediate cells to plate straps destined for coupling to other plate straps in contiguous cells of a multi-cell battery. In a preferred embodiment of the terminal-electrode plate welding of the present invention, the positive and negative electrode plates are interleaved in their respective cells with the plates interlayered with glass mat separators. The plates and separators are retained within a battery case of a heat-sensitive material such as polypropylene. The negative electrode plates are identical and have lugs extending through a slotted pocket in one wall of the battery case. Similar lugs of the positive electrode plates extend through a slotted pocket in another wall of the case. Subsequently, small beads of glass, or other suitable particulate insulating material (e.g., cut glass fibres, polypropylene particles, sand, etc.), are fed and vibrated, or brushed into one of the slots through which the lugs of one set of the electrode plates extend. These beads form a bed of predetermined thickness which tightly nest around and between the lugs to provide a barrier seal so that, during welding, the molten lead-based metals of the strap and upper portions of the lugs will not flow into areas of the interleaved positive and negative plates. This effectively eliminates the risk of a short-circuit between adjacent plates. Before welding, the extending lugs and terminal strap are appropriately fluxed (e.g., with a powdered azelaic acid) so that the strap weld zone is accordingly fluxed to assure a clean surface for optimal amalgamation of the lugs and the strap. By special alignment and insulation construction associated with the wall of the casing, the terminal is accurately positioned on the lugs with the plate strap portions overlying the lugs. Thereafter an induction coil is lowered into contact with the strap and into a weld position. The coil is energized at a predetermined percent of induction generator power (e.g., 85-90% depending on the size of power unit) for a predetermined time, six seconds for example, so that the strap and upper portions of the lugs are fused together. After the weld is formed, the coil is removed and the strap and lug amalgamation area is allowed to completely solidify to complete the connection of the first terminal to the plates of one polarity (e.g., negative).

The battery is then turned so the unwelded lugs are upright or otherwise accessible and the process is repeated to affix a terminal to the second row of lugs of the other electrode plates.

These and other features, objects and advantages of the invention will become more evident from the following detailed description and the accompanying drawings, in which:
Figure 1 is a pictorial view of a portion of a bi-polar battery case prior to the installation of positive and negative terminals to lugs of positive and negative electrode plates;
Figure 1A is a pictorial view of a pre-formed battery terminal, glass bead supply and an induction coil for use in manufacturing a battery according to the method of this invention;
Figure 1B is a top view of a portion of the battery case of Figure 1 with the terminal of Figure 1A installed thereon;
Figure 2 is a cross-sectional view of the battery case taken generally along sight lines 2-2 of Figure 1 and after the glass beads have been added;
Figure 3 is a view similar to the upper portion of Figure 2 showing the terminal of Figure 1A being installed on the case;
Figure 3A is a sectional view of a portion of the terminal of Figure 1A, taken along sight lines 3A-3A of Figure 3;
Figure 4 is a view similar to the view of Figure 3 showing welding of the terminal to the lugs of the electrode plates;
Figure 5 is a cross-sectional view taken along sight lines 5-5 of Figure 4.

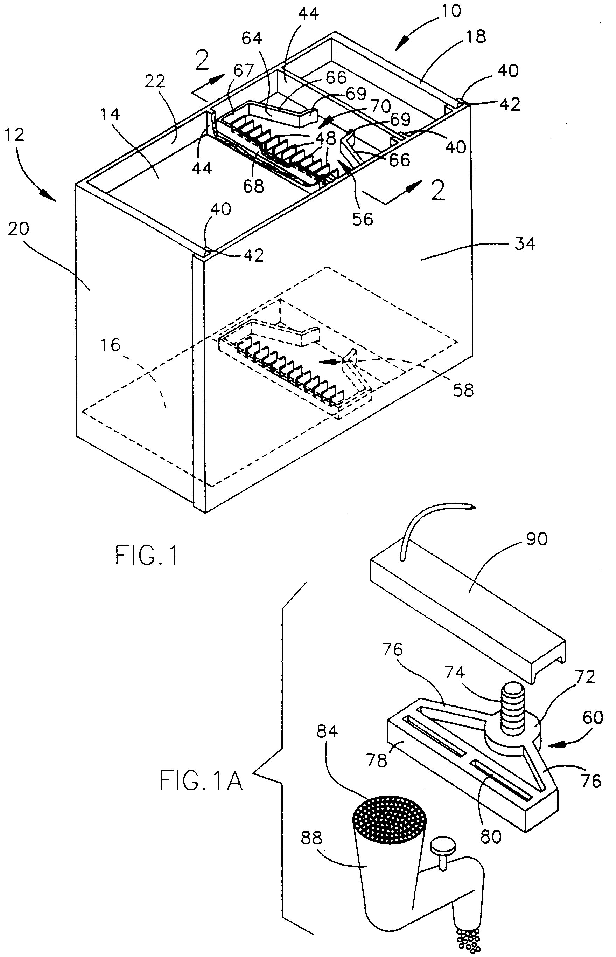

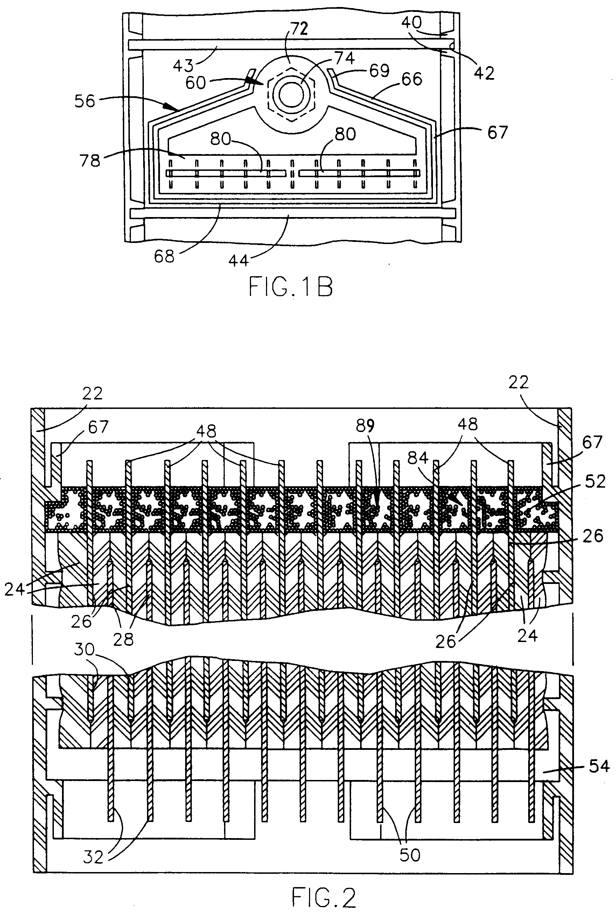

Turning now in greater detail to the drawings, there is shown in Figure 1 a portion of a three cell, bi-polar battery 10 having a box-like case of polypropylene or other suitable plastics material. The case comprises a main body 12 rectilinear in configuration with top and bottom end walls 14 and 16, side walls 18 and 20 and a base wall 22. After the cells of the main body have been packed with a cell element comprising glass mat separators 24 separating interleaved electrode plates, such as negative charge plates 26 and positive charge plates 28 in an upper cell, and the negative charge plates 30 and positive charge plates 32 in a lower cell, a cover plate 34 opposite to the base wall 22 is secured to the main body.

As shown, the cover plate 34 is formed with spaced pairs of elongated ribs 40 at predetermined positions along the width thereof to provide grooves 42 for receiving, and fluid-sealing securement to, leading edges of the side walls 18, 20 and intermediate re-inforcing walls 44. The interfaces of the cover plate 34 with the top and bottom end walls 14, 16 are also fluid-sealed so that the case will not leak electrolyte which is added at an appropriate time to the battery 10 to make it electrically operative.

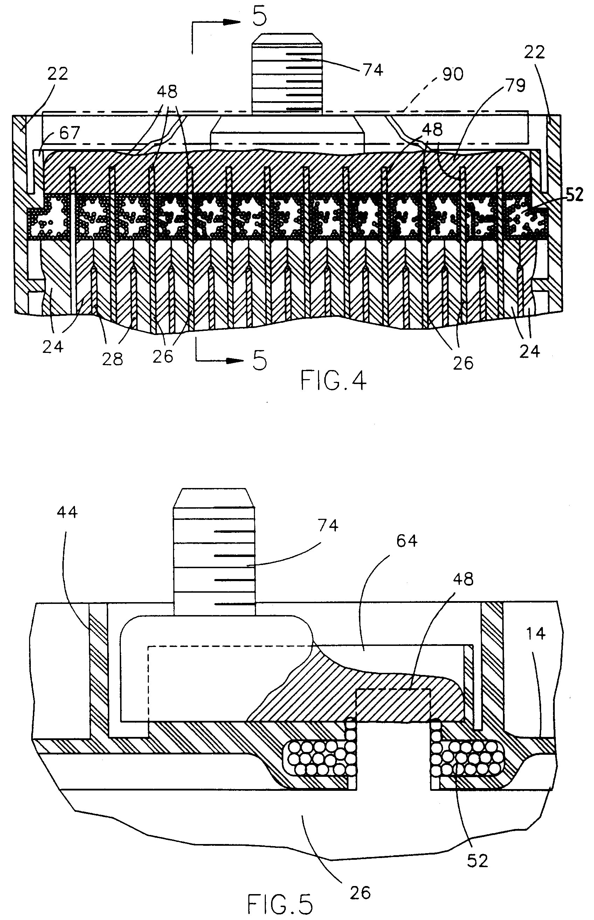

As shown in the drawings, and particularly in Figure 2, the negative electrode plates 26 adjacent to the top end wall and the positive electrode plates 32 adjacent to the bottom end wall are respectively made with lugs 48 and 50 which extend through slotted pockets 52 and 54 centrally formed in the opposite end walls of the case along the widths thereof. Figure 5 shows a slotted pocket 52 in cross-section and the corresponding slotted pocket 54 is similarly formed. In addition to the slotted pockets 52, 54, the top and bottom end walls are formed respectively with an insulator section 56, 58 for receiving and locating a pre-formed lead-based battery terminal, such as terminal 60 shown in Figures 1A and 1B, to protect the plastics battery case from heat damage whilst the terminal 60 and particularly a connector strap 78 thereof is being welded and fused to the lugs. Each insulator section further accurately positions the respective terminal and the associated plate lugs, and ensures that a terminal post fastener of the terminal is positioned with precision.

The insulator sections 56 and 58 have the same details, so only insulator section 56 is described in some detail. Preferably the insulator section 56 is integral with the case although it may be a separate piece. Section 56 comprises a containment wall 64 extending around the pocket 52 and adjacent portions of the end wall 14 that is configured to fit with some small clearance around the outer periphery of the terminal 60. The containment wall 64 is generally polygonal in shape but has converging wall segments 66 extending from end arms 67 of a back wall 68 that terminate in arcuate end portions 69 that co-operatively form a cup 70 to receive a cylindrical end portion 72 of the terminal 60 in which the head of an upstanding threaded terminal post fastener 74 is embedded.

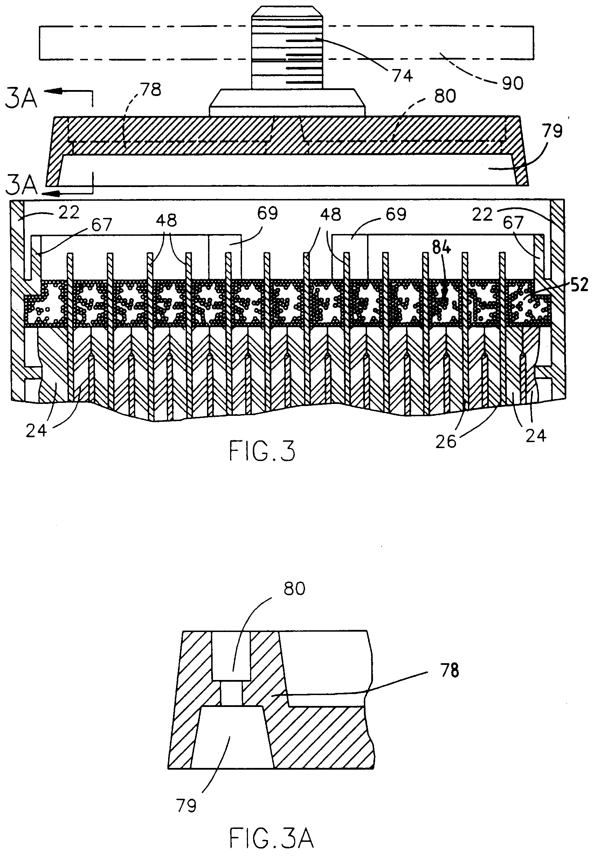

In its pre-moulded configuration, the terminal 60 has connector arms 76 diverging from the cylindrical end portion 72 which connect to opposite ends of a linear strap portion 78 which is formed with a recess 79, as best shown in Figures 3 and 3A, to receive the end portions of the rank of lugs 48 of the negative electrode plates 26. The strap 78 is formed with elongated venting slots 80 which allow the escape of gases when the lead terminal 60 is welded to the upper ends of lugs 48.

In the preferred embodiment of this invention, the pre-moulded lead terminal 60 is guided by the insulator section 56 into a seated position within the confines of the peripheral walls thereof. The hollow elongated open recess 79 of the strap 78 closely fits over and heat-shields the top of the row of lugs 48 which are to be heated and fused to the strap 78 of the terminal 60.

Before the pre-mouded terminal 60 is placed in the insulator section 56, however, a quantity of small-diameter spherical, glass beads 84, or the like, is poured into the slotted pocket 52 to make an insulating bed of a sufficient thickness to effectively block any flow of molten lead into the interior of the case which might possibly short-circuit the electrode plates.

In this regard, Figure 1A shows a container 88 into which a quantity of glass beads 84 has been loaded. These beads are selectively fed from the container into the pocket 52 so that, with accompanying vibration of the case or by brushing of the beads, the pocket 52 is filled and the bed of beads is tightly packed around a portion of the lugs 48. With the beads 84 supported by the upper ends of the separators 24 and tightly packed into the pocket, a block seal is made which insulates the electrode plates from the strap 78 and prevents the leaking of molten strap material into the cell elements of the battery during welding of the strap 78. With this bed of beads 84, the lugs 48 are also supported in their upright position by one another and by the side walls of the battery case so that improved amalgamation of the lugs and straps can be obtained. After the bed of glass beads has been prepared, the upper end portions of the lugs 48 extending above the bed and the inner surface of the strap 78 are fluxed with a powdered azelaic acid, or other suitable material, so that oxides otherwise formed during heating are absorbed, and the cleansing action of the flux during welding optimizes the subsequent fusion of the lugs 48 with the strap 78.

After fluxing, the pre-moulded terminal 60 is placed in position in the insulator section 56 portion of the upper end of the battery case with the recessed strap 78 receiving and shielding the lugs 48 whilst providing the lead, or other metal as used, for the lug-strap connection.

After the terminal 60 is positioned on the battery case, the battery is positioned in a station where it is clamped or otherwise held for the welding operation. After this positioning, induction coil 90 is moved into a weld position with the induction coil nesting over the strap portion 78 of the lead terminal 60.

The induction coil 90, which may be a component of an induction system such as the "Taylor Winfield Induction Welder", is energized for a predetermined time, such as six seconds at 85-90% of induction generator power, to heat the strap and lugs to 399°C (750°F), for example, to make a good weld. After the weld is made and with the strap 78 and upper ends of the upstanding lugs 48 sufficiently molten, they fuse together. The melt also fills the area between the strap 78 and arms 76 of the pre-moulded terminal, as best shown in Figures 4 and 5.

During the welding, the strap material becomes molten and flows onto the bed provided by the glass beads which importantly isolate the heat energy in the molten material from the case and prevent molten lead from flowing into the area of the interleaved positive and negative terminals to eliminate short-circuiting of any portion of the battery electrodes.

After the first weld is completed, the strap 78 of the terminal 60 and the lugs 48 are allowed to cool and solidify for about one second to complete the connection. After this welding and resultant amalgamation has taken place, the induction coil is removed from the terminal and away from the battery case which has not been distorted or otherwise heat-damaged by the welding process. The battery is then subsequently turned through 180° so that the unwelded lugs 50 appear on the top end of the battery case and the disclosed process is repeated so that the positive pre-moulded terminal can be welded to the lugs 50 of the positive electrode plates 32 without short-circuits and without heat-damage to the battery case.

Whilst the above description constitutes preferred embodiments of the invention, it will be appreciated that the invention can be modified and varied without departing from the scope of the accompanying claims.

## Claims

1. A method of joining laterally-spaced lead-based electrode plates (26,32) that are mounted in a battery case (12) of heat-sensitive material and that have laterally-spaced metallic lugs (48,50) extending from one end thereof through slot means (52,54) in a respective wall (14,16) of said case (12) to an elongated lead strap (78) for contacting said lugs (48,50), which method comprises the steps of: placing a molten lead barrier between the laterally-spaced lugs (48,50) to separate an interior of the case (12) from an exterior thereof; placing said strap (78) on said lugs (48,50) extending above said barrier to the exterior of said wall (14,16) of said case (12); applying heat energy to said strap (78) to melt and fuse said strap (78) and said lugs (48,50) together; terminating the application of heat energy to said strap (78); and allowing said strap (78) and said lugs (48,50) to solidify so that said plates (26,32) are physically connected to said strap (78), characterised in that the molten lead barrier is produced by placing a heat-insulating particulate material (84) in said slot means (52,54) and between the laterally-spaced lugs (48,50) in sufficient quantity to form said molten lead barrier and a heat-insulating bed (89) of particulate material separating the interior of the case (12) from the exterior thereof, said bed (89) lying adjacent roots of said lugs (48,50) proximate said plates (26,32) so as to leave distal portions of said lugs (48,50) extending above said bed (89) for fusing to said strap (78); said strap (78) is placed on said distal portions of said lugs (48,50) extending above said bed (89) to the exterior of said wall (14,16) of said case (12); and sufficient heat energy is applied to said strap (78) to melt and fuse said strap (78) and said distal portions of the lugs (48,50) together.

2. A method according to claim 1, of making a terminal for laterally-spaced lead-based electrode plates (26,32) mounted in a battery case (12) of a heat-sensitive material, in which a pre-moulded electric terminal (60) is provided having a lead connector strap (78) including a recess (79) for receiving said lugs (48,50); and said strap (78) is installed on the wall (14,16) of said case (12) so that said lugs (48,50) are located within said recess (79).

3. A method according to claim 2, of making a terminal for laterally-spaced lead-based electrode plates (26,32) mounted in a battery case (12) of a heat-sensitive material, which method includes providing an insulator and positioning section (56,58) on said wall (14,16) to precisely locate and retain said pre-moulded terminal (60) in position over said lugs (48,50) during said fusion and solidification steps.

4. A method according to claim 2 or 3, of fusing a pre-moulded lead battery terminal strap (60,78) to the upstanding lugs (48,50) of a group of electrode plates (26,32) mounted in a heat-sensitive battery case (12), in which a flux is applied to the distal portions of said lugs (48,50) and to a portion (78) of said terminal strap (60,78) to clean and prepare said distal portions and strap portion (78) for amalgamation with one another; and said strap (60,78) is positioned over said lugs (48,50) so that said fluxed portions are adjacent to one another prior to heating said strap (60,78) sufficiently to melt the fluxed portions of said strap (60,78) and said lugs (48,50) so that said strap material fuses with said lugs (48,50).

5. A lead-acid storage battery (10) comprising a case (12) having walls of a heat-sensitive plastics material, a first group of laterally-spaced lead-based electrode plates (26) having a first polarity mounted in said case (12), a second group of laterally-spaced lead-based electrode plates (32) of opposite polarity interleaved with said first group of plates (26), separator means (24) for separating said plates one from the other, an elongated slot (52) through a wall (14) in said case (12), said plates (26) of said first group each having a lug (48) extending therefrom through said slot (52) to define a file of laterally-spaced lugs (48) in said slot (52), and a lead plate strap (78) fused to the lugs (48) of said first group of plates (26), characterised in that there is a bed (89) of heat-insulating and molten-lead-barrier particulates (84) disposed in said slot (52) and around each of said lugs (48), said bed (89) serving to insulate said wall (14) from heat and to prevent molten lead from entering said container (12) whilst said plate strap (78) is being fused to said lugs (48) during the production of said storage battery (10).

6. A lead-acid storage battery (10) according to claim 5, in which said plate strap (78) joins said lugs (48) to a terminal (60) of the battery (10).

7. A lead-acid storage battery (10) according to claim 5, in which said plate strap (78) has vent slots (80) extending through said strap (78) prior to fusion thereof, to allow the escape of gases from a fusion zone during fusing of the strap (78) to the lugs (48).

8. A battery (10) comprising a case (12) of a heat-sensitive material and having walls (14,16,18,20,22,34) defining a container, said case (12) having a plurality of alternately-interleaved positive and negative polarity electrode plates (26,32) operatively disposed therein, each separated one from the other by an electrolyte-absorbing mat (24), a set of said plates (26) of one polarity being formed with lugs (48) extending from said plates (26), a slot (52) in a wall (14) of said case (12) through which said lugs (48) extend, and terminal strap means (78) welded to said lugs (48), characterised in that the slot is a slotted pocket (52), said mat (24) lies adjacent said pocket (52), and there is a heat-resistive particulate material disposed in said pocket (52) to seal said case (12) against passage of heat and molten material to and into said case (12) during welding of said terminal strap means (78) to said lugs (48).
